# EUROPÄISCHE PATENTANMELDUNG

(11) **EP 1 892 281 A1**
(43) Veröffentlichungstag der Anmeldung: **27.02.2008**
(21) Anmeldenummer: 06017388.7
(22) Anmeldetag: 22.08.2006
(51) Int. Cl.: C10L 5/04, C10L 5/08, C10L 5/46, C10L 5/48

(54) **Verfahren zur Herstellung eines Ersatzbrennstoffes für eine Verwendung in Kohlekraftwerken und/oder Müllverbrennungsanlagen und/oder Anlagen der Zementindustrie oder sonstigen Verbrennungsanlagen, in denen feste Brennstoffe verwendet werden**

(71) Anmelder: S.C. Ceramica International S.r.l., 410605 Oradea - Bihor (RO)
(72) Erfinder: Stache, Lutz, 03130 Spremberg (DE)
(74) Vertreter: Zinken-Sommer, Rainer

(57) **Zusammenfassung**

Die Erfindung betrifft ein Verfahren zur Herstellung eines Ersatzbrennstoffes für eine Verwendung in Kohlekraftwerken und/oder Müllverbrennungsanlagen und/oder Anlagen der Zementindustrie oder sonstigen Verbrennungsanlagen, wobei Rückstände der Kohleaufbereitung, insbesondere der Aufbereitung von Steinkohle zur Anwendung kommen.

Der Erfindung liegt die Aufgabe zugrunde, ein Verfahren zur Herstellung eines Ersatzbrennstoffes zu entwickeln, welches einfach, kostengünstig und genehmigungsfähig ist. Zudem soll der Ersatzbrennstoff einen derart hohen Brennwert aufweisen, der auch einen alleinigen Einsatz als Brennstoff möglich werden lässt.

Dies wird erfindungsgemäß dadurch erreicht, dass
die Kohlerückstände verladen und anschließend einer Sortieranlage zugeführt werden, in der eine Trennung in Grobbestandteile (taubes Gestein) und Feinbestandteile (Kohlestaub) erfolgt, wobei die Feinbestandteile in einem Anteil von 85 bis 30 M-% am Gesamtgemisch mit einem an sich bekannten vorsortierten Sekundärbrennstoff in Form von Fluff oder Pellets über eine Dosieranlage einer mahlenden Mischanlage zugeführt wird, in der ohne zusätzliche Energiezufuhr eine Mahlung sowie Trocknung des Gemisches erfolgt und je nach gewünschtem Verwendungsort und abhängig vom Feuchtegehalt ein staub- bis granulatförmiger Ersatzbrennstoff mit einem Heizwert von 13 bis 22 MJ/kg hergestellt wird.

## Beschreibung

Die Erfindung betrifft ein Verfahren zur Herstellung eines Ersatzbrennstoffes für eine Verwendung in Kohlekraftwerken und/oder Müllverbrennungsanlagen und/oder Anlagen der Zementindustrie oder sonstigen Verbrennungsanlagen, wobei Rückstände der Kohleaufbereitung, insbesondere der Aufbereitung von Steinkohle zur Anwendung kommen.

Die in der Vergangenheit im Rahmen der Kohleproduktion anfallenden ungenutzten Kohleanteile, wie z.B. minderwertige oder mit mineralischen Stoffen verunreinigte Kohle bzw. Rückstände aus dem Waschen der Steinkohle wurden bislang weitgehend in trockener, feuchter oder schlammartiger Form auf Halden zur Zwischenlagerung verkippt.

Aus der Literatur ist bekannt, dass derartige Restkohleanteile erneut der Feuerung z. B. in verpresster Form zugeführt wurden. In einigen Brikettfabriken werden Brikettabrieb, Kohlestaub und Kohleschlamm in bestimmten Anteilen dem Brikettiergut oder den Heizungsanlagen bzw. dem Heizgut beigegeben.

Bekannt ist ein Verfahren zur Nutzbarmachung von brennbaren Kohleabprodukten, wobei die gesammelten brennbaren Abprodukte verschiedener Art mit einem im jeweils verfügbaren Mengenverhältnis mit einem Bindemittelanteil von 3 bis 50% aus Gips und/oder Ton und/oder anderen anorganischen und/oder organischen bindewirksamen Stoffen, vorzugsweise Abprodukten und/oder spezifischen tierischen Sekreten, mit ggf. Wasserzugabe, in einem Mischprozess mittels einer Mischtrommel gemischt und anschließend durch einen Pressvorgang mittels einer Presse oder durch Granulierung verfestigt und stückig gemacht werden (DD 150 908).

Weiterhin bekannt ist ein Verfahren und eine Vorrichtung zur Förderung der thermischen Behandlung niederkalorischer Abfälle, wobei niederkalorische Abfälle wie Schlämme und verunreinigte Mineralien zum Ziel der thermischen Behandlung in Ent- und Vergasungs- bzw. Rost-, Drehrohr-, Etagen- oder Wirbelschicht-Verbrennungsanlagen mit trockenstabilisierten lagerfähigen Restabfällen vermischt werden (DE 195 34 303 A1). Zusätzlich können fossile Brennstoffe dem Verbrennungsprozess zugegeben werden.

Darüber hinaus ist es bekannt, getrocknete Klärschlämme durch Zugabe von geeigneten Kohlenstoffträgern zu konditionieren (DE 42 33 672 A1). Der Klärschlamm wird dabei als Sekundärbrennstoff verwendet. Sollte im Rahmen einer brennstofftechnischen Bewertung der Klärschlamm zu niedrige Brennstoffanteile aufweisen, wird dieser mit Steinkohle und/oder Steinkohlenkoks oder -staub und/oder kohlenstoffhaltigen Flugaschen und/oder Petrolkoks oder -staub und/oder Anodenstaub und/oder Ruß könditioniert. Die jeweiligen berennstofftechnischen Defizite des Klärschlammes werden dann durch die Kohlenstoffträger ausgeglichen.
Die Konditionierung soll bis zu einem Gehalt von ca. 25 000 KJ/Kg erfolgen.

Aus der DE 3 433 238 C1 ist bekannt, Müll mit einem Zusatzbrennstoff einer Wirbelschichtvergasung aufzugeben. Dabei wird der von anorganischem Material befreite Müll nach Wärmebehandlung zerkleinert. Als Zusatzbrennstoff kommen Kohle oder Holzbestandteile zur Anwendung.

Es ist bekannt, flüssige oder zähflüssige Industrieabfälle als Zusatzbrennstoff bei industriellen Brennprozessen einzusetzen, wobei als flüssige oder zähflüssige Industrieabfälle Harzabfälle, Lackschlämme oder Ölschlämme in Vermischung mit feinteiligen, festen, adsorptionsfähigen organischen Trägerstoffen und ggf. weiteren Zusatzstoffen zum Einsatz kommen (DE 29 35 103 C3). Auf ca. 100 Gewichtsanteile Trägerstoff kommen etwa 100 bis 200 Gewichtsanteile Industrieabfälle. Als Trägerstoffe kommen Torf, Stein- oder Braunkohlenstaub sowie Ruß in Frage.

Bekannt ist ein Verfahren zur Herstellung von festen Brennstoffen aus Müll, wobei nach einer Grob- und Feintrennung die energiearme Feinfraktion des Mülls mit Kohle gemischt und die Mischung in einem Entgasungsreaktor gelangt, in dem sie zu einem Pyrolysekoks verkokt wird (DE 32 44 569C2).

Die DE 28 33 731 C2 beschreibt ein Brikett zur Verwendung als Vergasungsausgangsstoff, bestehend aus einer Mischung aus festem Müll, Kohle und einem Bindemittel, die unter Druck verdichtet wird. Als Müll werden organische Abfälle und als Bindemittel Klärschlämme und Teerölkondensate verwendet.

Allen bekannten Verfahren ist folgendes gemeinsam:
1. Die Kohlenreststoffe/-rückstände allein weisen einen zu niedrigen Heizwert auf, um effektiv als Brennstoff oder Zusatz-Brennstoff eingesetzt zu werden.
2. Der Einsatz eines Gemisches aus Kohlen und Abfallsschlämmen, wie z. B. Klärschlämmen oder Ölschlämmen bringt Schwierigkeiten bzw. erhöhte Aufwendungen bei der Schadstoffreinigung und der Genehmigung des gemeinsamen Verbrennens unter Einhaltung der erforderlichen Grenzwerte (Sonderabfall!). Zudem besteht ein erhöhter Aufwand für mögliche Trocknungsverfahren.
3. Bei einer Kombination aus Kohle, Klärschlämmen und Müll kommen große Mengen an verrottbaren organischen Bestandteilen und Feuchtigkeit in das Gemisch. Das hat den Nachteil, dass mit dem hergestellten Gemisch viel Wasser in den Verbrennungsprozess eingebracht wird, welches durch zusätzliche Energiezufuhr wieder verdampft werden muss.
   Weiterhin wird aus dem Stand der Technik sichtbar, dass diese Lösungen im Wesentlichen entstanden sind, um anfallende Schadstoffe/ Reststoffe ( Sonderabfall, Klärschlämme) unter Zugabe von vorhandene/bisher verwendeten Basisbrennstoffen so zu vermischen, dass das Gemisch dann in den vorhandenen Verbrennungsanlagen verbrannt werden kann.

Der Erfindung liegt die Aufgabe zugrunde, ein Verfahren zur Herstellung eines Ersatzbrennstoffes zu entwickeln, welches einfach, kostengünstig und genehmigungsfähig ist. Zudem soll der Ersatzbrennstoff einen derart hohen Brennwert aufweisen, der auch einen alleinigen Einsatz als Brennstoff möglich werden lässt.

Dies wird erfindungsgemäß dadurch erreicht, dass die Kohlerückstände verladen und anschließend einer Sortieranlage zugeführt werden, in der eine Trennung in Grobbestandteile (taubes Gestein) und Feinbestandteile (Kohlestaub) erfolgt, wobei die Feinbestandteile in einem Anteil von 85 bis 30 M-% am Gesamtgemisch mit einem an sich bekannten vorsortierten Sekundärbrennstoff in Form von Fluff oder Pellets über eine Dosieranlage einer mahlenden Mischanlage zugeführt wird, in der ohne zusätzliche Energiezufuhr eine Mahlung sowie Trocknung des Gemisches erfolgt und je nach gewünschtem Verwendungsort und abhängig vom Feuchtegehalt ein staub- bis granulatförmiger Ersatzbrennstoff mit einem Heizwert von 13 bis 22 MJ/kg hergestellt wird.

Als Kohlerückstand werden vorzugsweise ehemalige Steinkohlenschlämme aus bestehenden Lagerhalden verwendet. Diese Rückstände weisen eine Schüttgutkonsistenz auf und sind nicht mehr schlammförmig. Ihr Wassergehalt liegt ca. bei 15 bis 25 M-%. Der Heizwert dieser Rückstände beträgt in der Regel 6 bis 14 MJ/kg. Derartige Halden sind an allen derzeitigen und ehemaligen Steinkohleabbaurevieren vorhanden und können derzeit nicht nutzbringend verwendet werden.

Als vorsortierter Sekundärbrennstoff wird ein weitgehend von verrottbaren organischen und metallischen Bestandteilen befreiter und in einer Körnung von 0 bis 40 mm mit einem sehr geringen Chlorgehalt (vorzugsweise von < 1%, aber durchaus auch bis zu 3 %) vorliegender Brennstoff aus Müllbestandteilen verwendet. Diese Sekundärbrennstoffe weisen weitgehend Papier- und Plastikbestandteile auf.

Es ist möglich, als Sekundärbrennstoff oder Anteilen davon auch vorgetrocknete Schlämme der Papierindustrie zu verwenden.

Die Verladung der Kohlerückstände wird mittels Bagger und/oder Radlader und/oder Kran durchgeführt.

Die Dosierung der einzelnen Gemischbestandteile erfolgt mittels Wägezellen und/oder Bandwaagen und/oder Zellenradschleusen.

Als mahlende Mischanlage wird vorzugsweise eine Hammermühle und/oder ein Hammerbrecher verwendet. Derartige Hammermühlen und/oder -brecher mahlen und mischen gleichzeitig die über die Dosiereinrichtungen zugeführten Bestandteile auf eine vorgegebene Korngröße. Durch die spezielle Form der Mahlung entsteht eine beachtenswerte Reibungswärme, die erfindungsgemäß im Nebenschluss zu einer zusätzlichen Trocknung des Gemisches führt. Dadurch wird ein relativ homogenes Gemisch in gut handhabbarer, schüttgutartiger (oder -ähnlicher) Konsistenz als Ersatzbrennstoff erzeugt, dessen Heizwert durch die spezielle Behandlung überraschender Weise höher als das gewichtete Mittel des Heizwertes der Ausgangsstoffe ist.

Alternativ können auch Zwangsmischer zum Einsatz kommen. Dann muss allerdings unter bestimmten Umständen das Gemisch oder Teile davon separat getrocknet werden.

Der vorsortierte Sekundärbrennstoff weist vorzugsweise einen Heizwert von 14 bis 28 MJ/kg auf und wird den Kohlerückständen in Abhängigkeit vom zu erzielenden Heizwert des Endproduktes in einem Anteil von 15 bis 70 M-% zugemischt. Er kann als Fluff mit einer Korngröße von 0 bis 35 mm oder als verpresste Pellets mit einer Korngröße von 10 bis 40 mm verwendet werden.

Die Erfindung weist folgende Vorteile auf:
1. Die in großen Mengen vorhandenen Rückstände der Steinkohlenaufbereitung, welche teilweise bereits seit Jahrzehnten in Form von Halden das Landschaftsbild in nahezu allen Kohlerevieren stören, können erstmals energieeffizient verwendet und abgebaut werden.
2. Durch die Verwendung von wenig Restfeuchte aufweisenden Gemischbestandteilen für die Herstellung des Ersatzbrennstoffes, wird keinerlei separate Trocknungskapazität benötigt.
3. Die Herstellung erfolgt sehr effizient und billig.
4. Der Ersatzbrennstoff setzt sich ausnahmslos aus Reststoffen bzw. Rückständen zusammen, ohne Bestandteile von Sondermüll aufzuweisen. Dies führt zu sehr einfachen Genehmigungsvoraussetzungen bei der thermischen Verwertung.
5. Die Zugabe eines derartigen erfindungsgemäßen Ersatzbrennstoffes in thermischen Anlagen ist an verschiedenen Stellen möglich und setzt wenig bis keine Zusatzinvestitionen an der Anlage voraus.
6. Der Ersatzbrennstoff lässt sich einfach und kostengünstig mittels offener Waggons o. ä. transportieren und ist mittels Kran oder Greifer verladbar.
7. Die vorsortierten Sekundärbrennstoffe weisen keine biologisch abbaubaren Bestandteile mehr auf und lassen sich einfach mit den aufbereiteten Kohlereststoffen vermischen sowie vermahlen.
8. Der Ersatzbrennstoff kann für jeden Verwendungszweck und jede thermische Anlage speziell angepasst gemischt und aufbereitet werden. Sein Heizwert ist durch das Mischungsverhältnis der in ihren Eigenschaften bekannten Ausgangsstoffe einstellbar zwischen 13 und 22 MJ/kg, was eine optimale Zugabe zu anderen Brennstoffen oder eine alleinige Verbrennung ermöglicht.
9. Ein weiterer Vorteil des erfindungsgemäßen Ersatzbrennstoffes ist seine Konsistenz als staub- bzw. granulatförmiges Gut, ohne eine separate Verpressung oder dergleichen.
10. Der Ersatzbrennstoff ist einsetzbar in allen fossilen Kraftwerken und/oder Müllverbrennungsanlagen und/oder Anlagen zur Zementherstellung oder sonstigen Verbrennungsanlagen.

### Ausführungsbeispiel

Anhand eines Ausführungsbeispieles soll nachstehend die Erfindung näher erläutert werden. Dabei zeigt:

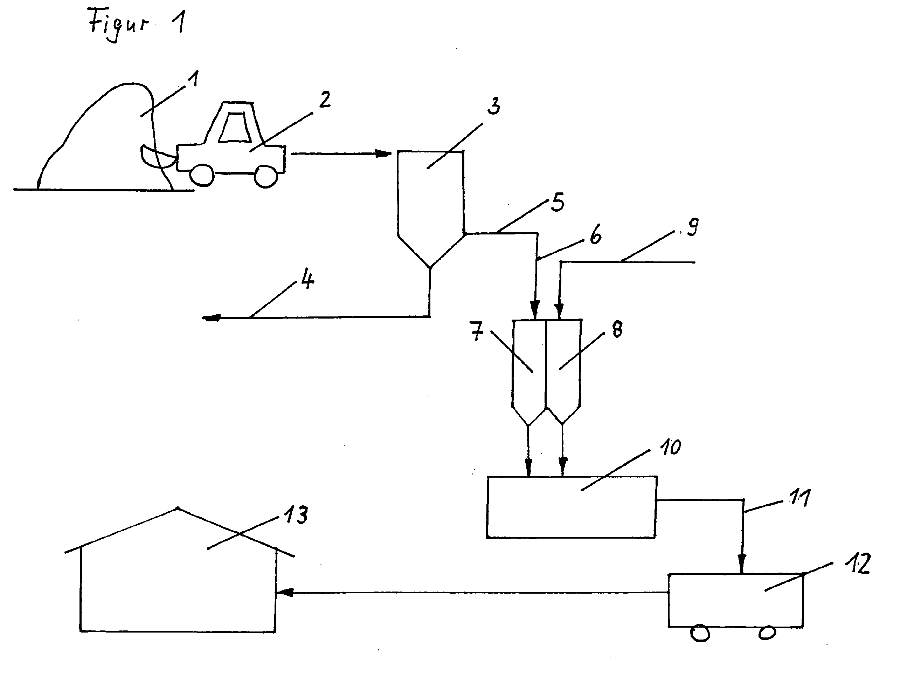

- Figur 1 - das Herstellungsverfahren als Fließschema im Ablauf

Die Kohlerückstand 1 werden mittels Radlader 2 von der Halde entnommen und einer Sortieranlage 3 zugeführt (Figur 1). Diese Sortieranlage 3 trennt der Rückstand 1 in einen Grobanteil 4, der überwiegend taubes Gestein enthält und einen Feinanteil 5, der vorwiegend aus Kohlestaub bzw. -granulat besteht.
Während der Grobanteil 4 entsorgt oder einer Verwendung als Straßenbaustoff zugeführt wird, erfolgt die Zuführung des Feinanteiles 5 über ein Förderband 6 zu einer Dosieranlage 7. Über die Dosieranlage 8 erfolgt die Zugabe des Sekundärbrennstoffes 9 in Form von Fluffanteilen oder Pellets.
Nach festgelegten Gemischanteilen erfolgt aus den Dosieranlagen 7 und 8 die Zugabe der einzelnen Bestandteile in den Hammerbrecher 10, wo eine Zerkleinerung und Mahlung sowie gleichzeitig eine Vermischung und Trocknung des Gemisches 11 erfolgt, bis eine Korngröße von 0 bis 10 mm erreicht ist. Der Hammerbrecher hat dabei eine Leistung von ca. 20 bis 200 t/h.
Aus dem Hammerbrecher 10 gelangt das Gemisch 11 über offene Waggons oder LKW 12 in geeignete Lagerhallen 13 bzw. zu den Verbrennungsanlagen.

### Liste der verwendeten Bezugszeichen

- 1 -: Kohlerückstand
- 2 -: Radlader
- 3 -: Sortieranlage
- 4 -: Grobanteil
- 5 -: Feinanteil
- 6 -: Förderband
- 7 -: Dosieranlage
- 8 -: Dosieranlage
- 9 -: Sekundärbrennstoff
- 10 -: Hammerbrecher
- 11 -: Gemisch
- 12 -: Waggon
- 13 -: Lagerhalle

## Patentansprüche

1. Verfahren zur Herstellung eines Ersatzbrennstoffes für eine Verwendung in Kohlekraftwerken und/oder Müllverbrennungsanlagen und/oder Anlagen der Zementindustrie, wobei Rückstände der Kohleaufbereitung, insbesondere der Aufbereitung von Steinkohle zur Anwendung kommen,
**gekennzeichnet dadurch, dass**
die Kohlerückstände (1) verladen und anschließend einer Sortieranlage (3) zugeführt werden, in der eine Trennung in Grobbestandteile (4) (taubes Gestein) und Feinbestandteile (5) (Kohlestaub) erfolgt, wobei die Feinbestandteile (5) in einem Anteil von 85 bis 30 M-% am Gesamtgemisch mit einem an sich bekannten vorsortierten Sekundärbrennstoff (8) in Form von Fluff oder Pelletts über eine Dosieranlage (7) einer mahlenden Mischanlage (9) zugeführt wird, in der ohne zusätzliche Energiezufuhr eine Mahlung sowie Trocknung des Gemisches erfolgt und je nach gewünschtem Verwendungsort und abhängig vom Feuchtegehalt ein staub- bis granulatförmiger Ersatzbrennstoff (10) mit einem Heizwert von 13 bis 22 MJ/kg hergestellt wird.

2. Verfahren nach Anspruch 1, **gekennzeichnet dadurch, dass** als Kohlerückstand (1) vorzugsweise ehemalige Steinkohlenschlämme aus bestehenden Lagerhalden verwendet werden.

3. Verfahren nach Anspruch 1 und 2, **gekennzeichnet dadurch, dass** der Kohlerückstand (1) einen Heizwert von 6 bis 14 MJ/kg aufweist.

4. Verfahren nach Anspruch 1, **gekennzeichnet dadurch, dass** als vorsortierte Sekundärbrennstoff (8) ein weitgehend von biologisch abbaubaren und metallischen Bestandteilen befreiter, mit einem Chlorgehalt von vorzugsweise < 1 M-%, aber durchaus auch < 3 M-%, Brennstoff aus Müllbestandteilen verwendet wird.

5. Verfahren nach Anspruch 1, **gekennzeichnet dadurch, dass** als vorsortierter Sekundärbrennstoff (8) oder Anteilen davon ein getrockneter Papierschlamm aus der Papierindustrie verwendet wird.

6. Verfahren nach Anspruch 1, **gekennzeichnet dadurch, dass** die Verladung der Kohlerückstände (1) mittels Bagger und/oder Radlader (2) und/oder Kran durchgeführt wird.

7. Verfahren nach Anspruch 1, **gekennzeichnet dadurch, dass** die Dosierung (7) der Bestandteile mittels Wägezellen und/oder Bandwaagen und/oder Zellenradschleusen durchgeführt wird.

8. Verfahren nach Anspruch 1, **gekennzeichnet dadurch, dass** als mahlende Mischanlage (9) eine Hammermühle und/oder ein Hammerbrecher verwendet wird.

9. Verfahren nach Anspruch 1, **gekennzeichnet dadurch, dass** der vorsortierte Sekundärbrennstoff (8) den Kohlerückständen (1) in einem Anteil von 15 bis 70 M-% zugemischt wird.

10. Verfahren nach Anspruch 1 und 9, **gekennzeichnet dadurch, dass** vorsortierter Sekundärbrennstoff (8) mit einem Heizwert von 14 bis 28 MJ/kg verwendet wird.

11. Verfahren nach Anspruch 1, 4, 9 und 10, **gekennzeichnet dadurch, dass** der vorsortierte Sekundärbrennstoff (8) als Fluff mit einer Korngröße von 0 bis 35 mm verwendet wird.

12. Verfahren nach Anspruch 1, 4, 9 und 10, **gekennzeichnet dadurch, dass** der vorsortierte Sekundärbrennstoff (8) als verpresste Pellets mit einer Korngröße von 10 bis 40 mm verwendet wird.
